(19)

Europäisches
Patentamt
European
Patent Office
Office européen
des brevets

(11) **EP 4 708 566 A1**

(12) **EUROPEAN PATENT APPLICATION**
published in accordance with Art. 153(4) EPC

(43) Date of publication:
**11.03.2026 Bulletin 2026/11**

(21) Application number: **25811147.5**

(22) Date of filing: **20.05.2025**

(51) International Patent Classification (IPC):
*H01Q 1/38* [(2006.01)]    *H01Q 1/36* [(2006.01)]
*B32B 15/02* [(2006.01)]

(52) Cooperative Patent Classification (CPC):
**B32B 15/02; H01Q 1/36; H01Q 1/38**

(86) International application number:
**PCT/KR2025/006815**

(87) International publication number:
**WO 2025/249820 (04.12.2025 Gazette 2025/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.05.2024   KR 20240070942**

(71) Applicant: **LG Chem, Ltd.**
**Seoul 07336 (KR)**

(72) Inventors:
• **LIM, Youngtaek**
  **Daejeon 34122 (KR)**
• **LEE, Yeon Keun**
  **Daejeon 34122 (KR)**
• **SEO, Han Min**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **TRANSPARENT ANTENNA FILM**

(57) The present disclosure relates to a transparent antenna film with improved non-visibility of a pattern.

【FIG. 6】

EP 4 708 566 A1

**Description**

[TECHNICAL FIELD]

CROSS-REFERENCE TO RELATED APPLICATION(S)

This application claims the benefit of priority based on Korean Patent Application No. 10-2024-0070942 filed on May 30, 2024, and the disclosures of which are incorporated herein by reference in their entirety.

This application relates to a transparent antenna film. Specifically, this application relates to a transparent antenna film with improved non-visibility of a pattern.

[BACKGROUND ART]

A film-type antenna is generally configured such that a transparent antenna having one or more mesh patterns is mounted on a transparent substrate. Here, the transparent antenna is divided into a region where an antenna wiring pattern is formed and a region where the antenna wiring pattern is not formed (a dummy region). Here, the dummy region is formed by segmenting a part of an electrically conductive line forming the mesh pattern, and is an electrically insulated region.

A difference in aperture ratio exists between the segmented pattern region and the (non-segmented) antenna wiring pattern region. Specifically, the aperture ratio of the non-segmented region is lower than that of the region having segmented parts. Due to this difference in aperture ratio, a problem arises in that a mesh pattern (e.g., an antenna wiring pattern) is visible to a user, making it unsuitable for transparent film applications.

In consideration of this problem, technology for preventing the wiring pattern from being visible is being developed.

[DETAILED DESCRIPTION OF THE INVENTION]

[TECHNICAL PROBLEM]

The present disclosure relates to a transparent antenna film.

The present disclosure also relates to a transparent antenna film with improved non-visibility of a pattern.

The above object and other objects of the present disclosure can all be solved by the present disclosure described in detail below.

[TECHNICAL SOLUTION]

According to an embodiment of the present disclosure, there is provided a transparent antenna film and a method for manufacturing the same.

The transparent antenna film provided by the present disclosure not only resolves the aforementioned problems but also provides optical properties (e.g., transparency, etc.) and electrical conductivity at a level equal to or greater than that of conventional products.

Hereinafter, the present disclosure will be described in more detail.

**Transparent Antenna Film**

According to an embodiment of the present disclosure, there is provided a transparent antenna film. The transparent antenna film may include a substrate layer (A) and a pattern (or a pattern layer) (B) formed on the substrate layer. Here, "transparent" may mean a case where the light transmittance for light in a wavelength range of about 380 to 780 nm is 75% or more, or 80% or more.

The type of the substrate layer (A) is not particularly limited. Any film that may secure the transparency required in the present disclosure may be used as the substrate layer without limitation, and examples of such a film may include glass or plastic. Specifically, plastics such as PET (Polyethylene terephthalate), PVB (polyvinylbutyral), PEN (polyethylene naphthalate), PES (polyethersulfon), PC (polycarbonate), polyolefin, or polyimide may be used.

A thickness of the substrate layer is not particularly limited, but, for example, a lower limit of the thickness of the substrate layer may be 50 $\mu$m or more, 100 $\mu$m or more, 150 $\mu$m or more, 200 $\mu$m or more, 250 $\mu$m or more, 300 $\mu$m or more, 350 $\mu$m or more, 400 $\mu$m or more, 450 $\mu$m or more, or 500 $\mu$m or more. And, an upper limit of the thickness of the substrate layer may be, for example, 1000 $\mu$m or less, 900 $\mu$m or less, 800 $\mu$m or less, 700 $\mu$m or less, 600 $\mu$m or less, or 500 $\mu$m or less. The specific thickness of the substrate layer may be adjusted at a level that does not hinder securing the durability and transparency of the transparent antenna film.

According to an embodiment of the present disclosure, the pattern (B) formed on the substrate layer may include at least two regions that are electrically disconnected from each other. Specifically, the antenna film of the present disclosure may include a substrate layer; an electrically conductive mesh pattern region (or an antenna wiring pattern region) (b1) located on the substrate layer; and a dummy pattern region (or a dummy wiring pattern region) (b2) located on the substrate layer, formed by segmenting a part of an electrically conductive line forming a unit pattern, and electrically disconnected from the electrically conductive mesh pattern region.

As will be described later, the pattern may be formed using a pattern layer having an embossed part and a recessed part. Here, the recessed part may have a shape corresponding to (or matching) the mesh pattern of the mesh pattern layer, and the recessed part may be filled with a conductive (e.g., metal-containing) filler to a predetermined height. As a result, an electrically conductive line including a metal may be formed within the recessed part, and an electrically conductive mesh pattern may be formed as the conductive line intersects.

The dummy pattern may be formed, for example, when a unit pattern constituting the entire mesh pattern exists, by disconnecting a recessed part line by forming an embossed part on a part of the recessed part line (corresponding to an electrically conductive line) that forms the unit pattern and then filling with a filler. Since the conductive line is formed as the filler fills the recessed part, and a conductive filler does not fill the embossed part that disconnects the recessed part, a dummy pattern region in which a part of the electrically conductive line is segmented may be formed through the above method.

The method of filling the recessed part with the conductive filler is not particularly limited, and a known method may be appropriately selected to fill the recessed parts with the filler.

The cross-sectional shape of the recessed part filled with the conductive filler is not particularly limited. For example, the cross-section of the recessed part of the mesh pattern layer may be an arc shape that is convex toward the substrate layer, or a polygonal cross-sectional shape including one or more interior angles. Here, the interior angle means a case where two or more straight lines are connected to form a certain angle in the cross-section of the recessed part. For example, if there is one interior angle, the cross-section of the recessed part may be a triangular cross-section, and if there are two interior angles, the cross-section of the recessed part may be a rectangular cross-section. In an embodiment of the present disclosure, the recessed part may have a rectangular cross-section ($\underline{\underline{\sqcup}}$) shape.

The type of metal included in the filler of the recessed part is not particularly limited. For example, the metal may include one or more selected from the group consisting of: silver (Ag); gold (Au); copper (Cu); aluminum (Al); platinum (Pt); nickel (Ni); tin (Sn); molybdenum (Mo); palladium (Pd); neodymium (Nd); and alloys made of two or more of the said metals.

In an example, the electrically conductive filler included in (or filled in) the recessed part may further include a blackening agent. The blackening agent may suppress the starburst phenomenon, thereby reducing the discomfort visually felt by a user. As the blackening agent, for example, carbon black may be used. In the prior art, a blackening method using a metal material was mainly used, but it is not sufficient to implement black (e.g., in the case of Cu, it is seen as dark brown). However, carbon black is a material closer to actual black, which is advantageous for securing visibility.

In an embodiment of the present disclosure, the filling of the recessed part with the filler may be performed two or more times with fillers having different components from each other. Accordingly, two or more regions (layers) including different components from each other may be sequentially filled (included) in the recessed part. That is, the electrically conductive line formed in the recessed parts may have a stacked structure of two or more regions having different components.

For example, after filling the recessed part with a first filler including a blackening agent, filling of the recessed part with a second filler including a metal may be performed. In this case, in the recessed parts, a first region (blackening agent region) having a predetermined height and including a blackening agent; and a second region (metal region) formed on the first region, having a predetermined height, and including a metal may be filled (included). Here, since each filler is sequentially filled in the vertical direction within the recessed part, the first region and the second region may also be referred to as a first layer (blackening agent layer) and a second layer (metal layer), respectively. In this case, considering structural stability, optical properties, and sheet resistance, the height of the first region may be formed to be 0.5 $\mu$m or more, and the height of the second region may be formed to be 3.5 $\mu$m or more.

In another example, after the filling with the second filler, filling with a third filler including a blackening agent may be additionally performed. Accordingly, in the recessed part, a first region (blackening agent region) having a predetermined height and including a blackening agent; a second region (metal region) formed on the first region, having a predetermined height, and including a metal; and a third region (blackening agent region) formed on the second region, having a predetermined height, and including a blackening agent may be filled (included). Here, since each filler is sequentially filled in the vertical direction within the recessed parts, the first region, the second region, and the third region may also be referred to as a first layer (blackening agent layer), a second layer (metal layer), and a third layer (blackening agent layer), respectively. In this case, considering structural stability, optical properties, and sheet resistance, the height of the first region may be formed to be 0.5 $\mu$m or more, the height of the second region may be formed to be 3.5 $\mu$m or more,

and the height of the third region may be formed to be 0.5 $\mu$m or more.

In an example, the first filler, the second filler, and the third filler filled in the recessed part may additionally include a binder (in addition to the blackening agent or metal). The binder fixes the materials included in each region and imparts structural stability. The type and relative content (to the blackening agent or metal) of the binder may be adjusted at a level that does not control the optical properties of the antenna to be achieved in the present disclosure.

According to an embodiment of the present disclosure, the transparent antenna film may satisfy the following Relational Expression 1.

80 % $\leq$ {(total pattern length of the dummy pattern region)/(total length of the electrically conductive mesh pattern region)} x 100% $\leq$ 120 %          [Relational Expression 1]

Here, the dummy pattern region and the electrically conductive mesh pattern region satisfying Relational Expression 1 may be a region arbitrarily selected within a size of 5 mm (width) x 5 mm (length) (e.g., an arbitrarily selected rectangular region). And, the total length of each pattern may be calculated based on an image captured by an optical microscope, as will be described later.

As confirmed through the experiments below, when the Relational Expression 1 is satisfied, the non-visibility of the pattern may be improved. That is, the non-visibility of the pattern may be improved through a design that satisfies Relational Expression 1.

In an example, a lower limit of Relational Expression 1 may be 85% or more, 90% or more, 95% or more, or 100% or more. And, an upper limit of Relational Expression 1 may be, for example, 115% or less, 110% or less, or 105% or less.

The upper and lower limits of the value of Relational Expression 1 may be adjusted according to the shape, line width, and/or aperture ratio of each region's pattern. That is, optimal visibility may be secured by adjusting the shape, line width, aperture ratio, and pattern length of each region's pattern.

According to an embodiment of the present disclosure, the transparent antenna film may satisfy the following Relational Expression 2.

|aperture ratio of the electrically conductive mesh pattern region - aperture ratio of the dummy pattern region |$\leq$ 2 %          [Relational Expression 2]

Here, the aperture ratio of each pattern may be calculated based on an image captured by an optical microscope, as will be described later.

As confirmed through the experiments below, when the Relational Expression 2 is satisfied, the non-visibility of the pattern can be improved. That is, the non-visibility of the pattern can be improved through a design that satisfies Relational Expression 2.

In an example, a lower limit of Relational Expression 2 may be 0.5% or more, 1.0% or more, or 1.5% or more. And, an upper limit thereof may be, for example, 1.5% or less, 1.0% or less, or 0.5% or less.

The upper and lower limits of the value of Relational Expression 2 may be adjusted according to the shape, line width, and/or (total) length of each region's pattern. That is, optimal visibility may be secured by adjusting the shape, line width, aperture ratio, and pattern length of each region's pattern.

In relation to the aforementioned Relational Expressions 1 and 2, if the pattern pitch of the dummy region is formed to be relatively narrow, the number of unit patterns within the dummy region increases, and the total length of the pattern may increase. And, if such a tendency increases excessively, the aperture ratio of the dummy region becomes significantly low, resulting in the dummy region being strongly visible. In the opposite case as well, either the dummy region or the conductive pattern region becomes strongly visible. Therefore, as described in relation to Relational Expressions 1 and 2, it is necessary to appropriately design the pitch size between regions, the total length of the pattern, and the aperture ratio (considering line width).

In an example, the transparent antenna film may satisfy both of the Relational Expressions 1 and 2. According to an embodiment of the present disclosure, a film satisfying both Relational Expressions 1 and 2 may have a lower limit value in relation to Relational Expression 1 of more than 100%, specifically 101% or more, 102% or more, 103% or more, 104% or more, 105% or more, 106% or more, 107% or more, 108% or more, 109% or more, or 110% or more. And, the film satisfying both Relational Expressions 1 and 2 may have an upper limit value in relation to Relational Expression 2 of 1.0% or less, 0.9% or less, 0.8% or less, 0.7% or less, 0.6% or less, 0.5% or less, 0.4% or less, or 0.3% or less.

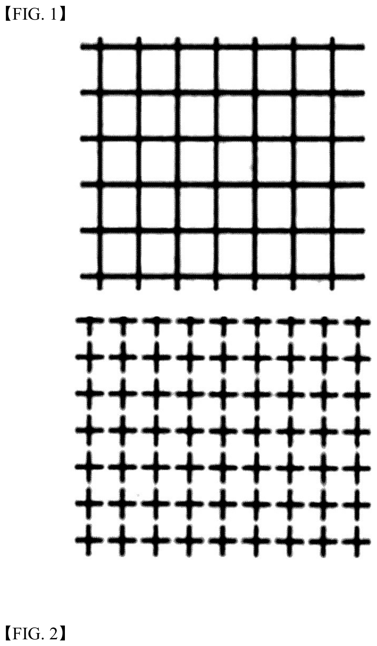

In an example, the electrically conductive mesh pattern (b1) may have a regular or irregular shape. Here, the unit pattern forming the mesh pattern may be in the form of a polygon including a straight line, or in the form of a figure including a curved line (FIG. 1).

In an embodiment of the present disclosure, the mesh shape of the electrically conductive mesh pattern or a plurality of closed figures partitioned by electrically conductive lines (embossed part or convex part figures) may have a regular shape. That is, the electrically conductive mesh pattern may be a regular pattern in which one unit figure (or unit pattern) is repeated. For example, the electrically conductive mesh pattern may be a pattern in which a unit pattern of a triangle, a rectangle, or a hexagon is repeated.

In another embodiment of the present application, the mesh shape of the electrically conductive mesh pattern or a plurality of closed figures (embossed part or convex part figures) partitioned by electrically conductive lines may have an irregular shape. Specifically, the electrically conductive mesh pattern may be an irregular (or random) pattern including a plurality of polygons with different shapes and/or sizes from each other.

In an example, the dummy pattern (b2) may have a regular or irregular shape. Here, the unit pattern forming the dummy pattern may be in the form of a polygon including a straight line, or in the form of a figure including a curved line (FIG. 1). However, as described above, in the case of the unit pattern forming the dummy pattern, a part of each (conductive line) side forming the unit pattern polygon is segmented (missing). For example, a regular dummy pattern may be one in which a unit pattern of a triangle, a rectangle, or a hexagon with a part of its side segmented is repeated. And, an irregular dummy pattern may be a pattern in which polygons with different numbers of sides, where a part of the sides is segmented, are randomly arranged.

In relation to the (unit) pattern shape of each region described above, the pattern may be formed such that when there are two branch points forming one boundary line shared by two adjacent unit patterns, the number of boundary lines extending from each branch point is 3 or more.

In an example, the aperture ratio of the electrically conductive mesh pattern region may be in the range of 75 to 99%. Specifically, a lower limit of the aperture ratio of the electrically conductive mesh pattern region may be, for example, 75% or more, 80% or more, 81% or more, 82% or more, 83% or more, 84% or more, or 85% or more, and an upper limit thereof may be, for example, 99% or less, 95% or less, specifically 90% or less, 89% or less, 88% or less, 87% or less, 86% or less, 85% or less, 84% or less, 83% or less, or 82% or less. When satisfying the said aperture ratio, it is not only advantageous for securing the transparency of the antenna film, but also advantageous for improving the non-visibility of the pattern by satisfying the aforementioned Relational Expression 1 and/or 2.

In an embodiment of the present disclosure, the aperture ratio of the dummy pattern region may satisfy the aforementioned Relational Expression 2. For example, the aperture ratio of the dummy pattern region may be 80% or more, 81% or more, 82% or more, 83% or more, 84% or more, or 85% or more, and an upper limit thereof may be, for example, 90% or less, 89% or less, 88% or less, 87% or less, 86% or less, 85% or less, 84% or less, 83% or less, or 82% or less.

In an example, the pitch of the electrically conductive mesh pattern region and the pitch of the dummy pattern region may be different from each other. As will be described later, the pattern of each region may be formed using a Voronoi method, and in relation to the figure forming the pattern, the pitch may mean the distance between the seed points within two adjacent unit figures (or unit patterns) when forming the pattern by a Voronoi diagram. By forming the pitches between regions to be different from each other, a film that satisfies Relational Expression 1 regarding the pattern length and Relational Expression 2 regarding the aperture ratio may be manufactured, and the pattern visibility of the transparent antenna film may be improved.

In an example, the pitch of the electrically conductive mesh pattern region may be formed to be larger than the pitch of the dummy pattern region. By forming the pitch of the dummy pattern region to be relatively narrow, the total length of the dummy pattern may be adjusted. As a result, a film that satisfies Relational Expression 1 regarding the pattern length and Relational Expression 2 regarding the aperture ratio may be manufactured, and the pattern visibility of the transparent antenna film may be improved.

In an example, the pitch of the electrically conductive mesh pattern region may be in range of 50 $\mu$m to 300 $\mu$m. Specifically, the electrically conductive mesh pattern region may have a pitch of, for example, 60 $\mu$m or more, 70 $\mu$m or more, 80 $\mu$m or more, 90 $\mu$m or more, 100 $\mu$m or more, 110 $\mu$m or more, 120 $\mu$m or more, 130 $\mu$m or more, 140 $\mu$m or more, 150 $\mu$m or more, 160 $\mu$m or more, 170 $\mu$m or more, 180 $\mu$m or more, 190 $\mu$m or more, or 200 $\mu$m or more. And, an upper limit thereof may be, for example, 290 $\mu$m or less, 280 $\mu$m or less, 270 $\mu$m or less, 260 $\mu$m or less, 250 $\mu$m or less, 240 $\mu$m or less, 230 $\mu$m or less, 220 $\mu$m or less, 210 $\mu$m or less, 200 $\mu$m or less, 190 $\mu$m or less, 180 $\mu$m or less, 170 $\mu$m or less, 160 $\mu$m or less, 150 $\mu$m or less, 140 $\mu$m or less, 130 $\mu$m or less, 120 $\mu$m or less, 110 $\mu$m or less, or 100 $\mu$m or less.

According to an embodiment of the present disclosure, the pitch and pattern shape of the dummy pattern region may be determined so as to satisfy the aforementioned Relational Expression 1.

In an example, the pitch of the dummy pattern region may be in range of 50 $\mu$m to 300 $\mu$m. Specifically, the dummy pattern region may have a pitch of, for example, 60 $\mu$m or more, 70 $\mu$m or more, 80 $\mu$m or more, 90 $\mu$m or more, 100 $\mu$m or more, 110 $\mu$m or more, 120 $\mu$m or more, 130 $\mu$m or more, 140 $\mu$m or more, 150 $\mu$m or more, 160 $\mu$m or more, 170 $\mu$m or more, 180 $\mu$m or more, 190 $\mu$m or more, or 200 $\mu$m or more. And, an upper limit thereof may be, for example, 290 $\mu$m or less, 280 $\mu$m or less, 270 $\mu$m or less, 260 $\mu$m or less, 250 $\mu$m or less, 240 $\mu$m or less, 230 $\mu$m or less, 220 $\mu$m or less, *210* $\mu$m or less, 200 $\mu$m or less, 190 $\mu$m or less, 180 $\mu$m or less, 170 $\mu$m or less, 160 $\mu$m or less, 150 $\mu$m or less, 140 $\mu$m or less, 130 $\mu$m or less, 120 $\mu$m or less, 110 $\mu$m or less, or 100 $\mu$m or less.

Meanwhile, the pitch of the electrically conductive mesh pattern region may be in range of 140 $\mu$m or more and

160 $\mu$m or less, and the pitch of the dummy pattern region may be in range of 100 $\mu$m or more and 130 $\mu$m or less.

On the premise of satisfying the aforementioned Relational Expressions 1 and 2, the number of unit figures or closed figures existing within each pattern may satisfy a predetermined ratio. Specifically, for regions selected with the same size, the ratio ($N_B$ / $N_A$) of the number of unit figures existing in the dummy pattern ($N_B$) to the number of unit figures existing in the electrically conductive mesh pattern ($N_A$) may be greater than 1 and 3 or less.

Here, only unit figures where 50% or more of the total area of the unit figure exists within the selected region are considered in the calculation of the said ratio ($N_B$ / $N_A$), and the number of unit figures of the dummy pattern is calculated assuming that the electrically conductive lines are extended without segmented parts.

For example, the said ratio ($N_B$ / $N_A$) may be 1.1 or more, 1.2 or more, 1.3 or more, 1.4 or more, 1.5 or more, 1.6 or more, 1.7 or more, 1.8 or more, 1.9 or more, 2.0 or more, 2.1 or more, 2.2 or more, 2.3 or more, 2.4 or more, 2.5 or more, 2.6 or more, 2.7 or more, 2.8 or more, or 2.9 or more. And, an upper limit thereof may be, for example, 2.9 or less, 2.8 or less, 2.7 or less, 2.6 or less, 2.5 or less, 2.4 or less, 2.3 or less, 2.2 or less, 2.1 or less, 2.0 or less, 1.9 or less, 1.8 or less, 1.7 or less, 1.6 or less, 1.5 or less, 1.4 or less, 1.3 or less, 1.2 or less, 1.1 or less, or 1.0 or less.

On the premise of satisfying the aforementioned Relational Expressions 1 and 2, the line width of the electrically conductive line forming the electrically conductive mesh pattern and the line width of the electrically conductive line forming the dummy pattern may be formed to be the same or different.

In an example, the line width of the electrically conductive line forming the electrically conductive mesh pattern and the line width of the electrically conductive line forming the dummy pattern may be formed to be the same. That the line width is the same means that the width of the recessed part of the pattern layer for forming the pattern or the line width of the conductive lines actually filled in the recessed part is the same within an error range. Here, the error range may be $\pm$ 0.5 $\mu$m or less, $\pm$ 0.45 $\mu$m or less, $\pm$ 0.40 $\mu$m or less, $\pm$ 0.35 $\mu$m or less, $\pm$ 0.30 $\mu$m or less, $\pm$ 0.25 $\mu$m or less, $\pm$ 0.20 $\mu$m or less, $\pm$ 0.15 $\mu$m or less, $\pm$ 0.10 $\mu$m or less, $\pm$ 0.05 $\mu$m or less, or $\pm$ 0.01 $\mu$m or less, based on the line width (unit: $\mu$m) of the electrically conductive mesh pattern described later.

In an example, the line width of the electrically conductive line forming the electrically conductive mesh pattern may be in range of 20 $\mu$m or less. Specifically, the line width of the electrically conductive mesh pattern may be 15 $\mu$m or less, 14 $\mu$m or less, 13 $\mu$m or less, 12 $\mu$m or less, 11 $\mu$m or less, 10 $\mu$m or less, or 9 $\mu$m or less, and a lower limit thereof may be, for example, 5 $\mu$m or more, 6 $\mu$m or more, 7 $\mu$m or more, 8 $\mu$m or more, 9 $\mu$m or more, or 10 $\mu$m or more.

In an example, the height of the electrically conductive line forming each region's unit pattern may be in range of 4.0 $\mu$m or more. Specifically, the height may be 4.5 $\mu$m or more, 5.0 $\mu$m or more, 5.5 $\mu$m or more, 6.0 $\mu$m or more, 6.5 $\mu$m or more, 7.0 $\mu$m or more, 7.5 $\mu$m or more, 8.0 $\mu$m or more, 8.5 $\mu$m or more, 9.0 $\mu$m or more, 9.5 $\mu$m or more, or 10.0 $\mu$m or more. And, an upper limit thereof may be, for example, 15.0 $\mu$m or less, 14.5 $\mu$m or less, 14.0 $\mu$m or less, 13.5 $\mu$m or less, 13.0 $\mu$m or less, 12.5 $\mu$m or less, 12.0 $\mu$m or less, 11.5 $\mu$m or less, 11.0 $\mu$m or less, 10.5 $\mu$m or less, 10.0 $\mu$m or less, 9.5 $\mu$m or less, 9.0 $\mu$m or less, 8.5 $\mu$m or less, 8.0 $\mu$m or less, 7.5 $\mu$m or less, 7.0 $\mu$m or less, 6.5 $\mu$m or less, or 6.0 $\mu$m or less.

In an example, the dummy pattern region may have a unit pattern of the same shape as the unit pattern of the electrically conductive mesh pattern region. For example, as in the experiments described later, an electrically conductive mesh pattern may first be prepared, the shape of the prepared electrically conductive mesh pattern may be maintained as is, but the pitch may be designed differently, and the dummy pattern region may be formed by disconnecting a part of the side forming the unit pattern.

In an example, the dummy pattern region may be formed such that the segmented length of the electrically conductive line is 20 $\mu$m or less. Specifically, the segmented length of the dummy pattern region may be, for example, 19 $\mu$m or less, 18 $\mu$m or less, 17 $\mu$m or less, 16 $\mu$m or less, 15 $\mu$m or less, 14 $\mu$m or less, 13 $\mu$m or less, 12 $\mu$m or less, 11 $\mu$m or less, or 10 $\mu$m or less. And, a lower limit thereof may be, for example, 5 $\mu$m or more, 6 $\mu$m or more, 7 $\mu$m or more, 8 $\mu$m or more, 9 $\mu$m or more, 10 $\mu$m or more, 11 $\mu$m or more, 12 $\mu$m or more, 13 $\mu$m or more, 14 $\mu$m or more, 15 $\mu$m or more, 16 $\mu$m or more, 17 $\mu$m or more, or 18 $\mu$m or more. When the segmented length of the dummy pattern region is adjusted within the above-described range, it is more advantageous for satisfying the said Relational Expression 2 regarding the aperture ratio.

In an example, the transparent antenna film may be one in which the line width of the antenna wiring pattern and the dummy pattern are the same, the pitch of the antenna wiring pattern is larger than the pitch of the dummy wiring pattern, and it satisfies the said Relational Expressions 1 and 2 simultaneously. In this case, as confirmed through the experiments described later, the visibility of the antenna film may be further improved. For example, the transparent antenna film of the present application may include an electrically conductive mesh pattern region having a pitch in the range of 140 $\mu$m to 160 $\mu$m; and a dummy pattern region having a pitch in the range of 100 $\mu$m to 130 $\mu$m, wherein the line width of each of the said patterns is formed to be the same in the range of 10 $\mu$m to 20 $\mu$m, and each region may be one that satisfies the aforementioned Relational Expressions 1 and 2 simultaneously.

**Method for Manufacturing a Transparent Antenna Film**

According to another embodiment of the disclosure, there may be provided a method for manufacturing a transparent antenna film. The method of the present disclosure may provide the transparent antenna film described above.

The method of the present disclosure may first determine a desired pattern shape, and then implement it by an imprinting method. A Voronoi diagram generator may be used to determine the pattern shape. Here, the Voronoi diagram generator means points arranged to form a Voronoi diagram as described above.

In an embodiment of the present disclosure, the irregular mesh pattern may be in the form of a border structure of closed figures formed by arranging arbitrary points within regularly arranged unit patterns (cells), and then connecting each point to the closest point compared to the distances from other points. In this case, the irregular pattern may be formed when a degree of irregularity is introduced into the method of arranging arbitrary points within the said regularly arranged unit patterns. For example, if the degree of irregularity is set to 0, the conductive pattern forms a square mesh structure when the unit cell is a square, and the conductive pattern forms a honeycomb structure when the unit cell is a regular hexagon. That is, the irregular pattern means a pattern in which the degree of irregularity is not 0.

Specifically, the method is a method for manufacturing a transparent antenna film including a substrate layer (A); and an electrically conductive mesh pattern layer (B) located on at least one surface of the substrate layer and having an embossed part and a recessed part, the method comprising:

> a step of forming a recessed mesh pattern by preparing a laminate including a substrate layer and a curable resin layer, and forming a mesh pattern including a recessed part and an embossed part on the curable resin layer (S1); and
> a step of forming an electrically conductive line by filling a filler including a metal into the recessed part having a shape corresponding to the pattern of the mesh pattern layer (B) to a predetermined height (S2), wherein
> the electrically conductive line constitutes the electrically conductive mesh pattern of the pattern layer (B).

In relation to the said step (S1), the method for forming the recessed mesh pattern is not particularly limited. For example, the mesh pattern may be manufactured by an imprinting method. A mold for performing imprinting may have a pattern corresponding to the embossed parts and recessed parts.

When forming a recessed mesh pattern through imprinting, the pressure and temperature may be appropriately adjusted in consideration of the type of the curable resin layer, the shape of the pattern, or the pattern size.

As described above, the filling of the recessed parts with the filler may be performed two or more times with fillers having different components from each other.

For example, the filling may include a step of filling a first filler including a blackening agent into the recessed parts to form a first region (blackening agent region) including the blackening agent; and a step of filling a second filler including a metal on the first region to form a second region (metal region).

In another example, the filling may include a step of filling a first filler including a blackening agent into the recessed parts to form a first region (blackening agent region) including the blackening agent; a step of filling a second filler including a metal on the first region to form a second region (metal region); and a step of filling a third filler including a blackening agent on the second region to form a third region (blackening agent region) including the blackening agent.

In the present disclosure, the electrically conductive filler may be filled to a depth (height) equal to or less than that of the recessed parts, and since the electrically conductive line formed by the filler is supported by the convex parts, the conductive line may be prevented from falling over or being peeled off. Furthermore, through such a configuration, the thickness of the conductive line may be stably increased, which is advantageous for lowering sheet resistance.

In an example, the height of the mesh pattern layer may be 50 $\mu$m or less. Here, the height of the mesh pattern layer may mean the (vertical) distance from one surface of the mesh pattern layer in contact with the substrate layer to one end of the convex part located on the opposite side (or the (vertical) distance from any point (P) of the mesh pattern layer in contact with the substrate layer to any point (P') of the mesh pattern layer opposite to the said point). Specifically, an upper limit of the height of the mesh pattern layer may be, for example, 45 $\mu$m or less, 40 $\mu$m or less, 35 $\mu$m or less, 30 $\mu$m or less, 25 $\mu$m or less, 20 $\mu$m or less, or 15 $\mu$m or less. A lower limit thereof may be, for example, 5 $\mu$m or more, 10 $\mu$m or more, 15 $\mu$m or more, or 20 $\mu$m or more.

In an example, the height (depth) of the recessed part may be 20 $\mu$m or less, 15 $\mu$m or less, 10 $\mu$m or less, or 5 $\mu$m or less. And, a lower limit thereof may be, for example, 4 $\mu$m or more, 5 $\mu$m or more, 6 $\mu$m or more, 7 $\mu$m or more, 8 $\mu$m or more, 9 $\mu$m or more, or 10 $\mu$m or more.

In an example, the mesh pattern layer, that is, the recessed parts and embossed parts forming it, may include a cured resin. Specifically, as will be described later, a curable resin layer is formed on a substrate layer, and a mesh pattern layer including recessed parts and embossed parts may be formed by imprinting on the curable resin layer. The type of cured resin included in the mesh pattern layer is not particularly limited. As long as it does not hinder securing the transparency required in the present application after curing, a resin that may be cured by heat or light can be used without limitation.

**[Advantageous Effects]**

The present disclosure has the effect of providing a transparent antenna film with improved visibility (e.g., non-visibility of a dummy pattern).

**[BRIEF DESCRIPTION OF THE DRAWINGS]**

FIG. 1 is a photograph of a region including a regular unit pattern made of straight lines according to an embodiment of the present disclosure (upper drawing: antenna wiring pattern region, lower drawing: dummy region).
FIG. 2 is a photograph of a region including an amorphous unit pattern made of straight lines according to another embodiment of the present disclosure (upper drawing: antenna wiring pattern region, lower drawing: dummy region).

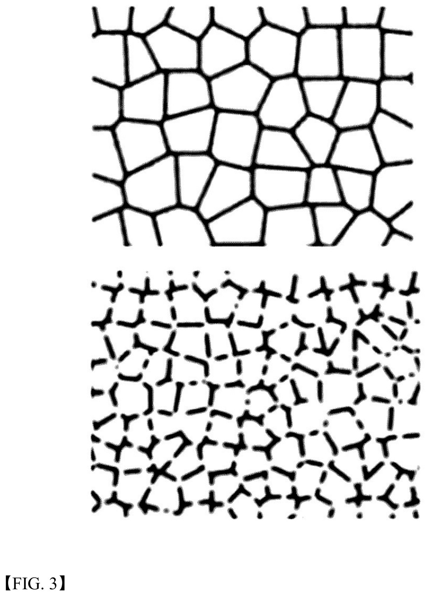

FIG. 3 is a photograph of a region including a unit pattern made of curved lines according to yet another embodiment of the present disclosure (upper drawing: antenna wiring pattern region, lower drawing: dummy region).
FIG. 4 is a photograph of a regular pattern shape according to an embodiment of the present application, showing an electrically conductive regular pattern and a regular dummy pattern.

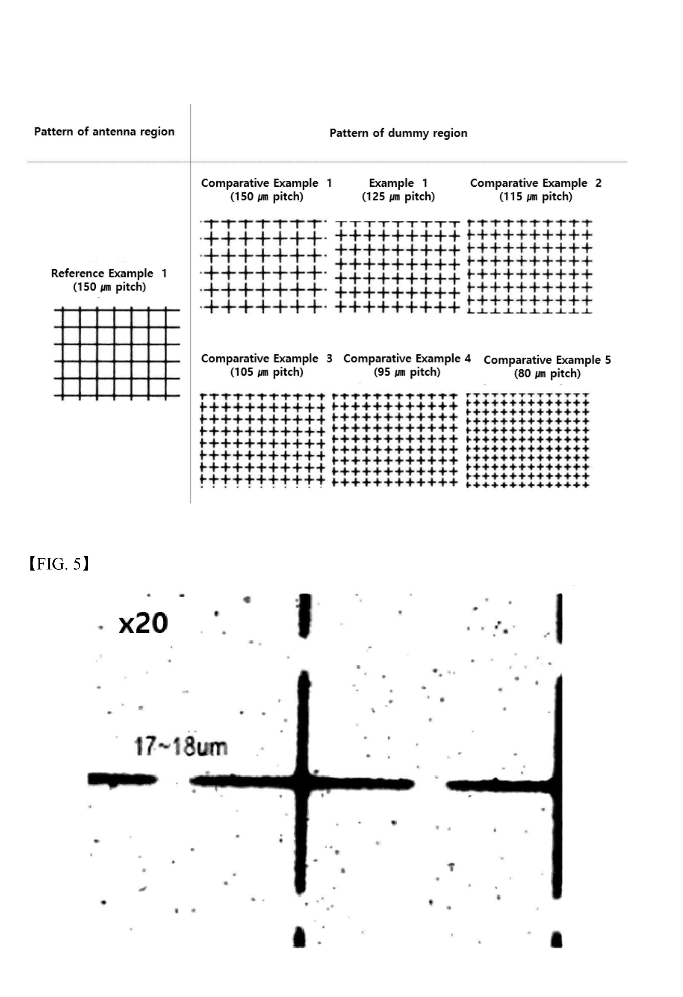

FIG. 5 shows the segmented nodes of the regular dummy pattern shown in FIG. 4.
FIG. 6 is a photograph of an irregular pattern shape according to another embodiment of the present application, showing an electrically conductive irregular pattern and an irregular dummy pattern.
FIG. 7 shows the segmented nodes of the irregular dummy pattern shown in FIG. 6.

**[DETAILED DESCRIPTION OF THE EMBODIMENTS]**

Hereinafter, the action and effects of the present disclosure will be described in more detail through specific embodiments of the disclosure. However, these are presented as examples of the invention, and the scope of rights of the invention is not limited in any sense thereby.

**Evaluation Method for Patterns**

The characteristics of each pattern manufactured in Experiments 1 and 2 described below were evaluated as follows.

(1) Optical Image Capture

An image of each pattern formed in transmission mode was captured at 5x magnification (resolution: 16 million pixels x 12 million pixels) using an optical microscope (Olympus). The distance per unit pixel is 0.65258 $\mu$m. The captured images are attached to the drawings.

(2) Aperture Ratio and Total Pattern Length

The aperture ratio and pattern length for each pattern's optical image were measured using image analysis software. The image analysis software analyzes the area and length of the image based on the length per unit pixel confirmed during image capture, and calculates the aperture ratio and total pattern length (ratio) as follows.
Specifically, the aperture ratio can be calculated as the ratio of the area where the pattern is not formed to the area of the entire image of each pattern. And, the pattern length ratio is calculated as the ratio of the total length of each experimental example pattern to the total length of the reference example pattern.

(3) Pattern Visibility

The 'reference example sample' of each experiment and the 'sample of each example or comparative example pattern' were placed adjacently on a white A4 paper, and the relative visibility of the dummy wiring region was evaluated with the naked eye from a distance of 30 cm and classified according to the following criteria.

Strong: The pattern is relatively strongly visible
Weak: The pattern is relatively weakly visible
Medium: The visibility of the pattern is intermediate between weak and strong

**Experiment 1: Manufacture and Evaluation of a Regular Pattern**

**Manufacture of the regular pattern of Reference Example 1:** A UV curable resin layer (thickness about 10-20 $\mu$m) was formed on a PET substrate layer with a thickness of 125 $\mu$m. And a rectangular mesh pattern layer having embossed parts and recessed parts was formed on the curable resin layer using a soft mold. At this time, the cross-section of the embossed part and the recessed part was a rectangular cross-section, the width of the recessed part (pattern line width) was 10 $\mu$m, and the pitch of the pattern was set to 150 $\mu$m based on the center of the rectangular closed figure.

Into the recessed parts of the said pattern layer, a mixture of a binder and carbon black was filled to form a first region, and then a mixture of a binder and Ag was filled to form a second region including Ag on the first region. In addition, a mixture of a binder and carbon black was additionally filled to form a third region including carbon black on the second region, and heat-treated. At this time, the first to third regions have the same width as the recessed part, and the height to which the first to third regions were filled was made to be the same as the depth of the recessed part. Among the pattern height, the height of the second region is about 4 to 5 $\mu$m, and the first region and the third region were formed to the same height.

**Manufacture of the regular patterns of Example 1 and Comparative Examples 1-5:** The regular patterns of the example and comparative examples were manufactured by the same manufacturing method as the reference example pattern, except that the pitch based on the center of the rectangular closed figure manufactured in the reference example was set differently as in Table 1 below, and a segmented part of the conductive line forming the pattern was formed by forming an embossed part of about 15 $\mu$m at the center of each side of the closed rectangle.

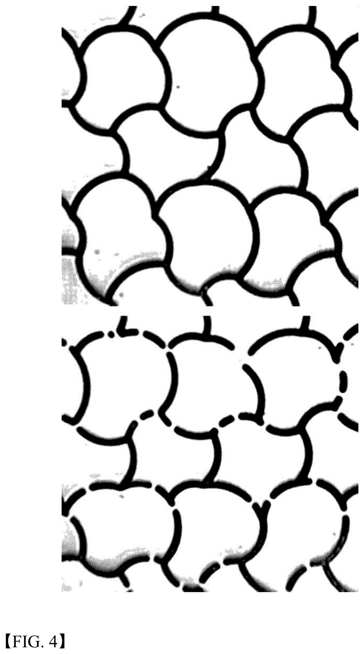

The specific mesh pattern shapes of the reference example, comparative examples, and example are as shown in FIG. 4, and the evaluation results for the manufactured regular patterns are as in Table 1 below.

[TABLE 1]

| Regular Pattern | Pattern Pitch ($\mu$m) | Total Pattern Length ($\mu$m) | Total Pattern Length Ratio (%) | Aperture Ratio (%) | Aperture Ratio Difference (%) | Pattern Visibility |
|---|---|---|---|---|---|---|
| Reference Example 1 | 150 | 13,744 | - | 81.1 | - | - |
| Comparative Example 1 | 150 | 12,170 | 89 | 83.9 | 2.8 | Strong (antenna region visible) |
| Example 1 | 125 | 14,347 | 104 | 81.6 | 0.5 | Weak |
| Comparative Example 2 | 115 | 16,310 | 119 | 82.1 | 1.0 | Medium (antenna region visible) |
| Comparative Example 3 | 105 | 16,344 | 119 | 79.9 | 1.2 | Medium (dummy region visible) |
| Comparative Example 4 | 95 | 17,979 | 131 | 77.1 | 4.0 | Strong (dummy region visible) |
| Comparative Example 5 | 80 | 20,443 | 149 | 75.4 | 5.7 | Strong (dummy region visible) |

* Total Pattern Length Ratio: % ratio of the total pattern length of each experimental example to the total pattern length of the reference example pattern

* Aperture Ratio Difference: Absolute value of the difference between the aperture ratio of the reference example pattern and the aperture ratio of each experimental example pattern

* In Reference Example 1, the number of unit figures for which pattern visibility was evaluated is 35, and in Example 1, the number of unit figures (assuming the segmented regions are connected) for which pattern visibility was evaluated is 48.

**Experiment 2: Manufacture and Evaluation of an Irregular Pattern**

**Manufacture of the pattern of Reference Example 2:** A pattern was formed in the same manner as in Reference Example 1, except that a pattern with a 70% degree of irregularity was formed based on the rectangular pattern used in Reference Example 1.

**Manufacture of the patterns of Example 2 and Comparative Examples 6-9:** Based on the irregular pattern formed in Reference Example 2, when an irregular pattern with a 70% degree of irregularity based on a hexagon was overlapped, an embossed part (segmented part) was formed in the overlapping part. The segmented length is about 15 $\mu$m (production process error range $\pm$3 $\mu$m). Except for this, a pattern was formed in the same manner as in Reference Example 1.

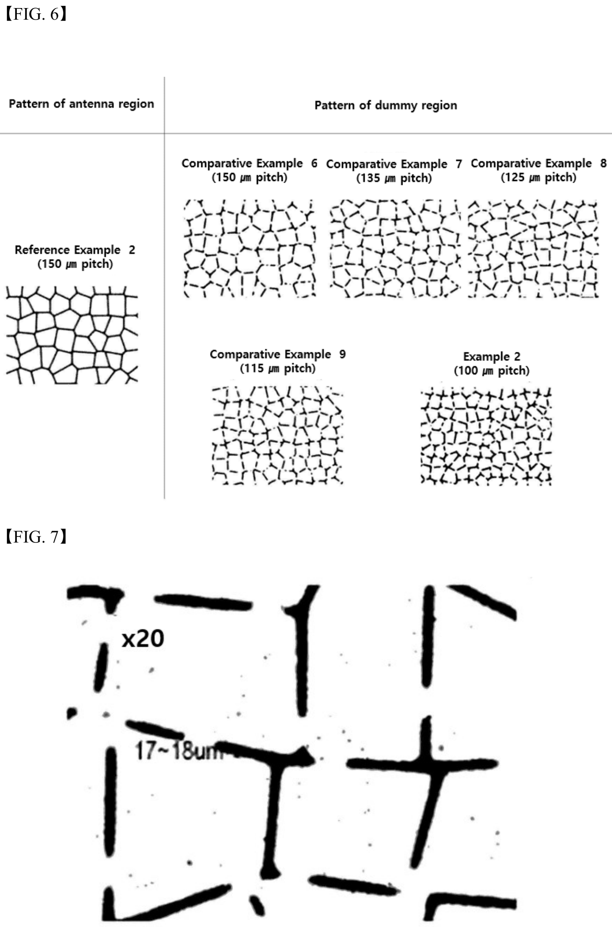

The specific mesh pattern shapes of the reference example, comparative examples, and example are as shown in FIG. 6, and the evaluation results for the manufactured irregular patterns are as in Table 2 below.

[TABLE 2]

| Irregular Pattern | Pattern Pitch ($\mu$m) | Total Pattern Length ($\mu$m) | Total Pattern Length Ratio (%) | Aperture Ratio (%) | Aperture Ratio Difference (%) | Pattern Visibility |
|---|---|---|---|---|---|---|
| Reference Example 2 | 150 | 15,747 | - | 81.7 | - | - |
| Comparative Example 6 | 150 | 11,388 | 72 | 87.5 | 5.8 | Strong (antenna region visible) |
| Comparative Example 7 | 135 | 13,076 | 83 | 85.8 | 4.1 | Strong (antenna region visible) |
| Comparative Example 8 | 125 | 13,657 | 87 | 85.3 | 3.6 | Strong (antenna region visible) |
| Comparative Example 9 | 115 | 14,407 | 91 | 84.8 | 3.1 | Strong (antenna region visible) |
| Example 2 | 100 | 17,006 | 108 | 81.2 | 0.5 | Weak |

* Total Pattern Length Ratio: % ratio of the total pattern length of each experimental example to the total pattern length of the reference example pattern

* Aperture Ratio Difference: Absolute value of the difference between the aperture ratio of the reference example pattern and the aperture ratio of each experimental example pattern

* In Reference Example 2, the number of unit figures for which pattern visibility was evaluated is 35, and in Example 2, the number of unit figures (assuming the segmented regions are connected) for which pattern visibility was evaluated is about 85.

As shown in Table 1 and Table 2 above, it was confirmed that the transparent antenna films according to the examples, by being designed to have a structure where the total pattern length ratio between the dummy pattern region and the electrically conductive mesh pattern region is 80% or more and 120% or less (Relational Expression 1), and the aperture ratio difference between the two regions is 2% or less (Relational Expression 2), exhibit a significantly improved effect on the non-visibility of the pattern.

That is, according to the examples, it was confirmed that when both the said Relational Expression 1 and Relational Expression 2 are satisfied, the non-visibility is improved to the extent that the pattern is almost not identifiable by the naked eye to the user.

On the other hand, in the comparative examples, it was confirmed that when at least one of Relational Expression 1 or 2 was not satisfied, the pattern was strongly visible and could be easily recognized by the user, which could degrade the usability and appearance quality of the transparent antenna film.

Therefore, in the examples, by simultaneously satisfying the said Relational Expressions 1 and 2, a high-quality transparent antenna film can be provided that can fundamentally solve the pattern visibility problem and secure excellent optical properties and electrical properties at the same time.

**Claims**

1.  A transparent antenna film, comprising:

    a substrate layer;
    an electrically conductive mesh pattern region located on the substrate layer; and
    a dummy pattern region located on the substrate layer, formed by segmenting a part of an electrically conductive line forming a unit pattern, and electrically disconnected from the electrically conductive mesh pattern region, wherein the transparent antenna film satisfies the following Relational Expressions 1 and 2:

    80 % ≤ {(total pattern length of the dummy pattern region)/(total length of the electrically conductive mesh pattern region)} x 100% ≤ 120 %       [Relational Expression 1]

    | aperture ratio of the electrically conductive mesh pattern region - aperture ratio of the dummy pattern region | ≤ 2 %       [Relational Expression 2]

    wherein, the dummy pattern region and the electrically conductive mesh pattern region satisfying the Relational Expression 1 are arbitrarily selected within a size of 5 mm width x 5 mm length.

2.  The transparent antenna film of claim 1,
    wherein the electrically conductive mesh pattern comprises a regular pattern or an irregular pattern.

3.  The transparent antenna film of claim 1,
    wherein an aperture ratio of the electrically conductive mesh pattern region is in a range of 75% to 99%.

4.  The transparent antenna film of claim 1,
    wherein a pitch of the electrically conductive mesh pattern region and a pitch of the dummy pattern region are different from each other.

5.  The transparent antenna film of claim 4,
    wherein the pitch of the electrically conductive mesh pattern region is formed to be larger than the pitch of the dummy pattern region.

6.  The transparent antenna film of claim 4,
    wherein the pitch of the electrically conductive mesh pattern region is in a range of 50 $\mu$m to 300 $\mu$m.

7.  The transparent antenna film of claim 4,

    wherein the pitch of the electrically conductive mesh pattern region is in a range of 140 $\mu$m or more and 160 $\mu$m or less, and
    the pitch of the dummy pattern region is in a range of 100 $\mu$m or more and 130 $\mu$m or less.

8.  The transparent antenna film of claim 1,
    wherein for regions selected with the same size, a ratio $N_B / N_A$ of a number of unit figures existing in the dummy pattern $N_B$ to a number of unit figures existing in the electrically conductive mesh pattern $N_A$ is greater than 1 and 3 or less: when calculating the said ratio $N_B / N_A$, only unit figures where 50% or more of the total area of the unit figure exists within the selected region are considered in the calculation of the said ratio $N_B / N_A$, and the number of unit figures of the dummy pattern is calculated assuming that the electrically conductive lines are extended without segmented parts.

9.  The transparent antenna film of claim 1,
    wherein a line width of an electrically conductive line forming the electrically conductive mesh pattern and a line width of an electrically conductive line forming the dummy pattern are formed to be the same.

10. The transparent antenna film of claim 9,
    wherein the line width of the electrically conductive line forming the electrically conductive mesh pattern is 20 $\mu$m or less.

11. The transparent antenna film of claim 1 or 4,
wherein the dummy pattern region has a unit pattern of the same shape as a unit pattern of the electrically conductive mesh pattern region.

12. The transparent antenna film of claim 1,
wherein the dummy pattern region is formed such that a segmented length of an electrically conductive line is 20 $\mu$m or less.

【FIG. 1】

【FIG. 2】

【FIG. 3】

【FIG. 4】

| Pattern of antenna region | Pattern of dummy region |
|---|---|

**Comparative Example 1** (150 μm pitch)　　**Example 1** (125 μm pitch)　　**Comparative Example 2** (115 μm pitch)

**Reference Example 1** (150 μm pitch)

**Comparative Example 3** (105 μm pitch)　　**Comparative Example 4** (95 μm pitch)　　**Comparative Example 5** (80 μm pitch)

【FIG. 5】

x20

17~18um

【FIG. 6】

【FIG. 7】

## INTERNATIONAL SEARCH REPORT

| International application No. |
|---|
| **PCT/KR2025/006815** |

| A. | CLASSIFICATION OF SUBJECT MATTER |
|---|---|

**H01Q 1/38**(2006.01)i; **H01Q 1/36**(2006.01)i; **B32B 15/02**(2006.01)i

According to International Patent Classification (IPC) or to both national classification and IPC

| B. | FIELDS SEARCHED |
|---|---|

Minimum documentation searched (classification system followed by classification symbols)

H01Q 1/38(2006.01); H01Q 21/06(2006.01); H01Q 9/04(2006.01); H10K 50/80(2023.01); H10K 59/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전도성 메쉬 패턴(conductive mesh pattern), 더미 패턴(dummy pattern), 길이 (length), 개구율(aperture ratio), 투명 안테나 필름(transparent antenna film)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0074262 A (DAI NIPPON PRINTING CO., LTD.) 26 May 2023 (2023-05-26) paragraphs [0003], [0009], [0027], [0037]-[0038], [0046]-[0047], [0049]-[0051], [0085], [0129]; and figures 1-2b, 12-14 | 1-4,9-12 |
| A | | 5-8 |
| A | KR 10-2024-0074834 A (DAI NIPPON PRINTING CO., LTD.) 28 May 2024 (2024-05-28) paragraph [0214]; and figures 10-11 | 1-12 |
| A | KR 10-2024-0058492 A (DONGWOO FINE-CHEM CO., LTD.) 03 May 2024 (2024-05-03) paragraphs [0099]-[0112]; and figures 4-5 | 1-12 |
| A | KR 10-1967771 B1 (DONGWOO FINE-CHEM CO., LTD. et al.) 10 April 2019 (2019-04-10) paragraphs [0075]-[0081]; and figures 6-8 | 1-12 |
| A | KR 10-2021-0052804 A (SAMSUNG DISPLAY CO., LTD.) 11 May 2021 (2021-05-11) paragraphs [0041]-[0086]; and figures 2-5 | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 August 2025** | **22 August 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/006815**

| Patent document cited in search report | | | Publication date (day/month/year) | Patent family member(s) | | | Publication date (day/month/year) |
|---|---|---|---|---|---|---|---|
| KR | 10-2023-0074262 | A | 26 May 2023 | CN | 116325348 | A | 23 June 2023 |
| | | | | EP | 4224625 | A1 | 09 August 2023 |
| | | | | EP | 4224625 | A4 | 18 December 2024 |
| | | | | JP | 2022-060188 | A | 14 April 2022 |
| | | | | TW | 202224256 | A | 16 June 2022 |
| | | | | US | 2023-0318203 | A1 | 05 October 2023 |
| | | | | WO | 2022-071608 | A1 | 07 April 2022 |
| KR | 10-2024-0074834 | A | 28 May 2024 | CN | 118077098 | A | 24 May 2024 |
| | | | | TW | 202327164 | A | 01 July 2023 |
| | | | | US | 2024-0258690 | A1 | 01 August 2024 |
| | | | | WO | 2023-058664 | A1 | 13 April 2023 |
| KR | 10-2024-0058492 | A | 03 May 2024 | KR | 10-2024-0058491 | A | 03 May 2024 |
| | | | | WO | 2024-090930 | A1 | 02 May 2024 |
| KR | 10-1967771 | B1 | 10 April 2019 | CN | 111344900 | A | 26 June 2020 |
| | | | | CN | 111344900 | B | 13 September 2022 |
| | | | | JP | 2021-501529 | A | 14 January 2021 |
| | | | | JP | 7078718 | B2 | 31 May 2022 |
| | | | | KR | 10-1973742 | B1 | 29 April 2019 |
| | | | | US | 11139555 | B2 | 05 October 2021 |
| | | | | US | 2020-0266526 | A1 | 20 August 2020 |
| | | | | WO | 2019-088792 | A1 | 09 May 2019 |
| KR | 10-2021-0052804 | A | 11 May 2021 | CN | 112750870 | A | 04 May 2021 |
| | | | | EP | 3816765 | A1 | 05 May 2021 |
| | | | | KR | 10-2805061 | B1 | 12 May 2025 |
| | | | | US | 11275463 | B2 | 15 March 2022 |
| | | | | US | 11625116 | B2 | 11 April 2023 |
| | | | | US | 2021-0132722 | A1 | 06 May 2021 |
| | | | | US | 2022-0197425 | A1 | 23 June 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240070942